# EUROPÄISCHE PATENTSCHRIFT

(11) **EP 0 894 958 B1**
(45) Veröffentlichungstag und Bekanntmachung des Hinweises auf die Patenterteilung: **09.02.2005**
(21) Anmeldenummer: 98109317.2
(22) Anmeldetag: 22.05.1998
(51) Int. Cl.: F02B 37/18, F02B 37/007, F02D 23/00, F02D 41/00

(54) **Fehlererkennungseinrichtung für Brennkraftmaschinen und ein Verfahren zum Betreiben einer Brennkraftmaschine**
Failure detecting unit for an internal combustion engine and method for operating an internal combustion engine
Dispositif de détection de défaut pour un moteur à combustion interne et procédé d' actionnement d' un moteur à combustion interne

(30) Priorität: 31.07.1997 DE 19733189; 20.08.1997 DE 19736064
(43) Veröffentlichungstag der Anmeldung: 03.02.1999
(73) Patentinhaber: Dr.Ing.h.c. F. Porsche Aktiengesellschaft, 70435 Stuttgart (DE)
(72) Erfinder: Kerkau, Martin, 75443 Ötisheim (DE)

(56) Entgegenhaltungen:
- DE-C- 19 513 156
- US-A- 4 127 088
- US-A- 5 247 793
- US-A- 5 318 003
- PATENT ABSTRACTS OF JAPAN vol. 010, no. 265 (M-515), 10. September 1986 (1986-09-10) & JP 61 087928 A (TOYOTA MOTOR CORP), 6. Mai 1986 (1986-05-06)

## Beschreibung

Die Erfindung betrifft eine Fehlererkennungseinrichtung für Brennkraftmaschinen und ein Verfahren zum Betreiben einer Brennkraftmaschine nach dem Gegenstand der unabhängigen Patentansprüche.

Fehler in Brennkraftmaschinen sollten allgemein ebenso zuverlässig wie kostengünstig erkannt werden können. Zur Fehlererkennung sind beispielsweise Fehlererkennungseinrichtungen vorgesehen, die einem Bauteil der Brennkraftmaschine zugeordnet sind und einen Fehler bzw. ein Fehlverhalten an diesem Bauteil erkennen können. Es ist offensichtlich, daß bei einer solchen Vorgehensweise für jedes Bauteil, das möglicherweise einen Fehler erzeugt, eine eigene Fehlererkennungseinrichtung notwendig ist.

Aus der DE 195 13 156 C1 ist bereits eine turboaufgeladene Brennkraftmaschine mit einer Fehlererkennungseinrichtung bekannt geworden, bei der von einer Regelung der zugeführten Luft auf einer Steuerung der zugeführten Luft umgeschaltet wird, wenn ein einseitiger Fehler in einem der Abgasstränge erkannt wird. Zur Erkennung eines Fehlers in einem der Abgasstränge wird vorgeschlagen, die Brennkraftmaschine dahingehend zu überwachen, ob eine Häufung von Zündaussetzern an einer der Zylinderbänke auftritt.

Darüber hinaus sind Fahrzeuge - beispielsweise der Porsche 911 turbo - bekannt, die zwei getrennte Abgasstränge aufweisen und bei denen im Rahmen der Kraftstoffzumessung eine Lambda-Regelung eingesetzt wird. Für die Lambda-Regelung ist in jedem Abgasstrang eine eigene Lambda-Sonde vorgesehen, die Kraftstoffzumessung und die Lambda-Regelung erfolgt jedoch für die das Fahrzeug antreibende Brennkraftmaschine als Ganzes. Die verwendeten Lambda-Sonden weisen bei einem Lambda-Wert von ca 1,0 einen Signalsprung auf, so daß nur eine Lambda-Regelung auf den Soll-Wert 1,0 möglich ist. Aus der US-4 127 088 ist eine Fehlererkennungseinrichtung mit jeweils eine Lambda-Sonde in jedem Abgasstrang auch bekannt.

Gegenüber dem Stand der Technik ist es Aufgabe der Erfindung, eine Brennkraftmaschine mit einer verbesserten Fehlererkennung zu schaffen.

Diese Aufgabe wird erfindungsgemäß mit den Merkmalen der unabhängigen Patentansprüche gelöst.

Der Erfindung liegt dabei die Erkenntnis zugrunde, daß bei einer Brennkraftmaschine, bei der die Bemessung der Kraftstoffzufuhr für die Brennkraftmaschine als ganzes (d.h. nicht spezifisch für einen Teil der Brennkraftmaschine) erfolgt, eine Reihe von Bauteilen Einfluß auf einen Füllungsgrad der Brennkraftmaschine oder auf andere, den Verbrennungsvorgang beeinflussende Größen nimmt. Sind diese Bauteile dann mehrfach vorgesehen, wobei jedes der Bauteile unabhängig einem Teil der Brennkraftmaschine zugeordnet ist, so lassen sich bei einer Brennkraftmaschine mit getrennten Abgassträngen Fehler dadurch ermitteln, daß die Abgaszusammensetzung der einzelnen Abgasstränge ermittelt und mit dem entsprechenden Wert der anderen Abgasstränge verglichen wird. Weicht nun einer der Abgasstränge bei diesem Vergleich ab, so läßt sich hieraus auf einen Fehler in diesem Abgasstrang bzw. dem diesen Abgasstrang zugeordneten Bauelementen schließen. Als Bauelemente, die einen derartigen Fehlererkennung zugänglich sind, sind beispielsweise Einspritzdüsen, Verstelleinrichtungen für den Ventilhub, Verstelleinrichtungen für die Lage der Nockenwellen, Zündeinrichtungen sowie alle vom Abgasstrom durchsetzten Bauelemente zu nennen.

Erfindungsgemäß wird daher vorgeschlagen, bei einer gattungsgemäßen Brennkraftmaschine Lambdasonden einzusetzen, die ein stetiges Signal für den Lambdawert des Abgases erzeugen. Die Fehlererkennungseinrichtung bildet eine Differenz der Lambda werte und vergleicht diese Differenz mit einem vorgebbaren Grenzwert und erkennt dann einen Fehler, wenn die von den Lambdasonden gelieferten Signale voneinander abweichen. Bisher verwendete Lambdasonden erzeugen kein stetiges Signal, sondern einen Signalsprung bei einem Lambdawert von ca. 1,0. Der besondere Vorteil nach der Erfindung ist daher im Einsatz der stetig arbeitenden Lambdasonden zu sehen, mit denen es nun möglich ist, einen Vergleich der von den Lambdasonden gelieferten Signale vorzunehmen und hieraus auf eine unterschiedliche Abgaszusammensetzung in den einzelnen Abgassträngen zu schließen. Darüber hinaus ist nach der Erfindung mit Hilfe einer einzigen Fehlererkennungseinrichtung bzw. eines einzigen Verfahrens zur Fehlererkennung eine Mehrzahl von Fehlern erkennbar.

In den Unteransprüchen sind vorteilhafte Weiterbildungen der Erfindung dargestellt.

So wird vorgeschlagen, die beschriebene Fehlererkennungseinrichtung bei einer turboaufgeladenen Brennkraftmaschine einzusetzen, die getrennte Abgasstränge aufweist und darüber hinaus abhängig von einem Fehlersignal von einer Luftmassenregelung auf eine Luftmassensteuerung umschaltet. Bei einer derartigen Brennkraftmaschine, wie sie beispielsweise aus der DE 195 13 156 C1 bekannt ist, kann mit Hilfe der Erfindung in einfacher Weise das für eine Umschaltung benötigte Fehlersignal erzeugt werden. Sobald bei einer derartigen Brennkraftmaschine bereits zur Kraftstoffzumessung eine Lambda-Regelung eingesetzt wird, können die für diese Lambda-Regelung benötigten Lambdasonden sowohl von einer Einrichtung zur Kraftstoffzumessung wie auch von der erfindungsgemäßen Fehlererkennungseinrichtung verwendet werden, so daß keine zusätzlichen Kosten entstehen.

Soweit bei einer Brennkraftmaschine Einrichtungen zur Verstellung der Winkellage von Nockenwellen oder zur Verstellung des Ventilhubes von Einlaßventilen und/oder Auslaßventilen vorgesehen sind, so läßt sich ein Fehler in einer dieser Verstelleinrichtungen besonders einfach dadurch ermitteln, daß unmittelbar anschließend an eine Betätigung der Verstelleinrichtung geprüft wird, ob die erfindungsgemäße Fehlererkennungseinrichtung ein Fehlersignal abgibt. Wenn eine derartige Prüfung ergibt, daß als Reaktion auf die Betätigung des Verstellelementes ein Fehlersignal auftritt, so kann daraus geschlossen werden, daß der Fehler von der soeben betätigten Verstelleinrichtung ausgelöst worden ist und der Fehler kann dieser Verstelleinrichtung zugeordnet werden.

Die Erfindung ist nachstehend anhand des in den Figuren dargestellten Ausführungsbeispieles näher beschrieben. Es zeigen:
- Fig. 1: eine Übersicht über eine turboaufgeladene Brennkraftmaschine und
- Fig. 2: ein Blockschaltbild einer Motorsteuerung mit einer Fehlererkennungseinrichtung.

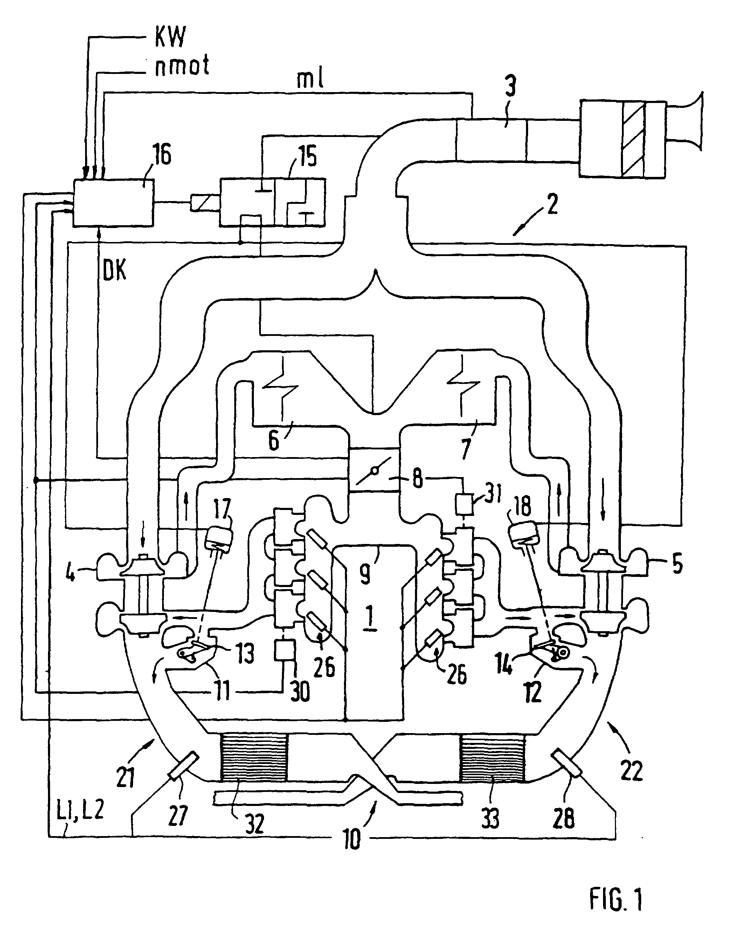

Die in Fig. 1 gezeigte Brennkraftmaschine 1 weist in einem Ansaugtrakt 2 einen Luftmassenmesser 3 auf. Hinter dem Luftmassenmesser 3 wird der Ansaugluftstrom zu einem linken Abgasturbolader 4 und einem rechten Abgasturbolader 5 geteilt. Die verdichteten Teil-Ansaugluftströme treten in getrennte Ladeluftkühler 6, 7 ein. Nach den Ladeluftkühlern 6, 7 wird die Ladeluft zusammengeführt und strömt über eine Drosselklappe 8 und einen Verteiler 9 zu Zylinderköpfen der Brennkraftmaschine 1. Über Einspritzdüsen 26 wird dem Ansaugluftstrom Kraftstoff beigemischt.

Eine Abgasanlage 10 weist zwei getrennte Abgasstränge 21 und 22 auf. Über die Abgasstränge 21,22 können die Abgase der Brennkraftmaschine 1 den Abgasturboladern 4,5 zugeführt werden oder über Bypassleitungen 11,12, die von Bypassventilen 13,14 verschlossen werden können, daran vorbeigeleitet werden. Stromab der Abgasturbolader 4,5 ist in jedem der Abgasstränge 21,22 je eine Lambda-Sonde 27,28 angeordnet, die getrennt für jeden der Abgasstränge 21,22 den Wert des Sauerstoffanteiles kontinuierlich ermittelt und ein Signal L1 bzw. L2 abgibt. Auf die Lambda-Sonden 27,28 folgen im Abgasstrom zwei Katalysatoren 32,33,

Die Bypassventile 13,14 sind zusammen mit den Bypassleitungen 11,12 jeweils in den Abgasturboladern 4,5 integriert. Zur Ansteuerung der Bypassventile 13,14 ist ein gemeinsames Taktventil 15 vorgesehen, das von einer einen Luftmassenregler enthaltenden Motorsteuerung 16 angesteuert wird. Zur Ansteuerung der Bypassventile 13,14 verwendet das Taktventil 15 Unterdruck, der der Ansauganlage 2 an einer Entnahmestelle vor der Drosselklappe 8 entnommen wird. Als Stellglied dient je eine Membrandose 17,18. Mit Hilfe Taktventils 15 kann der Steuerdruck auf die Membrandosen 17,18 beliebig zwischen Umgebungsdruck und dem hinter den Ladeluftkühlern 6,7 anliegenden Druck eingestellt werden. Der Steuerdruck auf die Membranfläche wirkt gegen eine Federkraft. Der Membranweg wird über ein Gestänge zum Verstellen der Bypassventile 13,14 geleitet. Die Ableitung des Bypass-Abgases erfolgt in den sich stark öffnenden Turbinenaustritts-Diffusor.

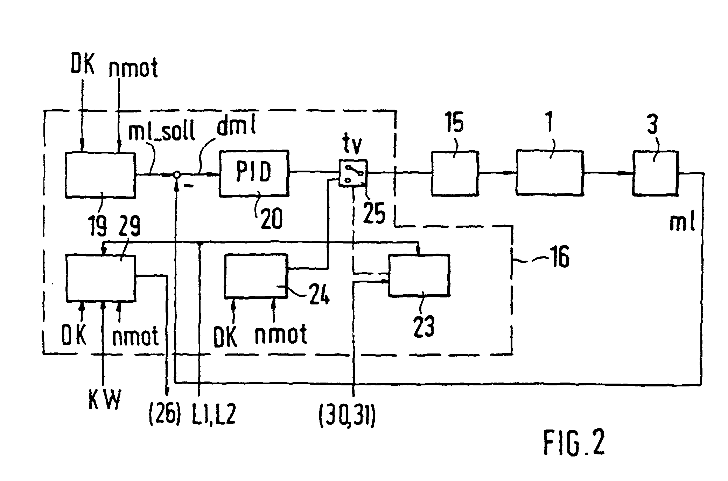

Die Motorsteuerung 16 ist im Blockschaltbild nach Fig. 2 näher dargestellt. Für die Zwecke der Luftmassenregelung bildet die Brennkraftmaschine 1 die Regelstrecke, an der der Luftmassenmesser 3 als Meßglied den Istwert der Luftmasse ml bestimmt. Dieser wird der Motorsteuerung 16 zugeführt und dort mit einem Sollwert für die Luftmasse ml_soll verglichen, der von einem Sollwertgeber 19 abhängig von einer Drehzahl nmot der Brennkraftmaschine 1 und einer Drosselklappenstellung DK der Drosselklappe 8 bestimmt wird. Ergebnis dieses Vergleiches ist eine Regelabweichung dml, die einem ebenfalls im Luftmassenregler 16 enthaltenen PID-Regler 20 zugeführt wird. Dieser liefert als Stellgröße ein Tastverhältnis tv an das Taktventil 15 und steuert so die als Ladedrucksteller arbeitenden Bypassventile 13,14 an.

Eine ferner in der Motorsteuerung 16 angeordnete Kraftstoffzumeßeinrichtung 29 berechnet aus den Istwert der Luftmasse ml, der Drehzahl nmot, der Drosselklappenstellung DK und einem Kurbelwellenwinkel KW Signale zur Ansteuerung der Einspritzdüsen 26. Hierbei wird für die gesamte Brennkraftmaschine 1 aus den Hauptsteuergrößen Luftmasse ml, Drehzahl nmot und Drosselklappenstellung DK ein einzustellendes Kraftstoff-Luft-Verhältnis bestimmt. Die Kraftstoffzufuhr erfolgt dann gleichmäßig über alle Einpritzdüsen 26.

Ein den Abgasdurchsatz vermindernder Defekt in einem der Abgasstränge, bspw. dem linken Abgasstrang 21, führt nun dazu, daß die vom Luftmassenmesser 3 registrierte Luftmasse abnimmt. Dies zieht einen Anstieg der Regelabweichung dml nach sich, und der PID-Regler 20 schließt über das Taktverhältnis tv die Baypassventile 13 und 14. Infolgedessen steigt im rechten Abgasstrang 22 die Drehzahl desrechten Abgasturboladers 5 stark an. Der duch den Defekt im linken Abgasstrang 21 verminderte Abgasdurchsatz führt dabei zu einem deutlich geringeren Anstieg der Drehzahl des linken Abgasturboladers 4.

Die Drehzahl des rechten Abgasturboladers 5 kann infolgedessen rasch in kritische Bereiche geraten und damit zur Zerstörung des Abgasturboladers 5 führen.

Um dies zu erkennen überwacht in der Motorsteuerung 16 eine Fehlererkennungseinrichtung 23 die Signale L1, L2 der Lambdasonden 27 und 28. Innerhalb der Fehlererkennungseinrichtung 23 wird eine Differenz der Signale L1 und L2 gebildet. Anschließend wird der Betrag dieser Differenz mit einem Grenzwert verglichen, um kleinere, aus Fertigungs- und Betriebstoleranzen herrührende Abweichungen der Signale L1 und L2 von einer durch einen Fehler ausgelösten Differenz zu unterscheiden. Überschreitet der Betrag der Differenz den voreingestellten Grenzwert, so wird ein vor dem Taktventil 15 angeordneter Umschalter 25 betätigt, so daß das Taktventil 15 nun von einer Luftmassensteuerung 24 anstelle des PID-Reglers 20 angesteuert wird. Die Luftmassensteuerung 24 bestimmt das Taktverhältnis tv aus der Drehzahl nmot und der Drosselklappenstellung DK.

Wird die beschriebene Fehlererkennungseinrichtung 23 im Form eines Programmes in einem Steuergerät ausgeführt, so ist es selbstverständlich, daß die Umschaltung in der Weise erfolgt, daß ein Steuerungsprogramm für die Luftmasse ml bei erkanntem einseitigen Fehler nicht zu einem Unterprogramm für die Luftmassenregelung, sondern zu einem Unterprogramm für die Luftmassensteuerung verzweigt.

Ein derartiges Programm zur Fehlererkennung kann einen Fehler einseitig in einem der Abgasstränge 21,22 erkennen, indem folgende Schritte ausgeführt werden:
- Einlesen der Signale L1 und L2 von den Lambda-Sonden 27 und 28,
- Berechnen des Betrages der Differenz der Lambda-Werte L1 und L2,
- Vergleichen des Betrages der Differenz mit einem Grenzwert und
- wenn der Grenzwert überschritten ist: Ausgeben eines Fehlersignales und Verzweigen zu einem Unterprogramm für die Luftmassensteuerung
- wenn der Grenzwert nicht überschritten ist: Verzweigen zu einem Unterprogramm für die Luftmassenregelung.

Die hier am Beispiel einer Luftmassenregelung gezeigte Fehlererkennung kann für jede andere auf den einer aufgeladenen Brennkraftmaschine zugeführten Luftstrom wirkende Regelung angewandt werden; dies gilt auch für Ladedruckregelungen.

An der Brennkraftmaschine 1 sind darüber hinaus Verstellvorrichtungen 30 und 31 zur Verstellung der Winkellage der Einlaßnockenwelle (nicht dargestellt) vorgesehen. Durch diese Verstelleinrichtungen 30 und 31 kann die Einlaßnockenwelle aus einer Grundstellung mit spätem Einlaßbeginn und geringer Überschneidung in eine Arbeitsstellung mit frühem Einlaßbeginn und großer Überschreitung gebracht werden. Durch diese Verstellung ändert sich bei den betroffenen Zylindern der Brennkraftmaschine 1 der Füllungsgrad und damit auch das Kraftstoff-Luft-Gemisch, das notwendig ist, um eine vorgegebene Abgaszusammensetzung (Rest-Sauerstoff) zu erzielen. Die beiden Verstelleinrichtungen 30, 31 wirken unabhängig voneinander jeweils auf eine Hälfte der Brennkraftmaschine 1.

Erfolgt durch einen einseitigen Defekt, beispielsweise an der zweiten Verstelleinrichtung 31, auf dieser Seite der Brennkraftmaschine keine Verstellung der Einlaßnockenwelle, so weisen die beiden Hälften der Brennkraftmaschine 1 unterschiedliche Füllungsgrade auf. Da die Kraftstoffzumesseinrichtung 29 das Kraftstoff-Luft-Verhältnis für die gesamte Brennkraftmaschine 1 bestimmt, resultiert aus den unterschiedlichen Füllungsgraden bei gleicher Kraftstoffzufuhr für alle Zylinder eine unterschiedliche Abgaszusammensetzung in den Abgassträngen 21 und 22. In Folge der unterschiedlichen Abgaszusammensetzung unterscheiden sich auch die von den Lambdasonden 27 und 28 erzeugten Lambdawerte L1 und L2, so daß die Differenz der Lambdawerte L1 und L2 den Grenzwert überschreitet und die Fehlererkennungseinrichtung 23 ein Fehlersignal erzeugt. Da dieses Fehlersignal in unmittelbarer zeitlicher Folge der Betätigung der Verstelleinrichtung 30 aufgetreten ist, kann die Fehlererkennungseinrichtung 23 diesen Fehler unmittelbar der Verstelleinrichtung 30 zuordnen.

Abhängig von der Auslegung der Brennkraftmaschine 1 kann nun die Betätigung des Umschalters 25 auch unterdrückt werden, wenn davon auszugehen ist, daß ein Ausfall einer der Verstelleinrichtungen 30, 31 nicht zu einer Beschädigung der Brennkraftmaschine 1 führt. Alternativ hierzu kann auch ein solches Fehlersignal dazu verwendet werden, eine Betätigung der Verstelleinrichtungen 30, 31 zurückzunehmen und weitere Betätigungen zu unterdrückten, bis zum Rahmen eines Werkstattbesuches oder ähnlichem die Betätigung der Verstelleinrichtung 30 und 31 wieder freigegeben wird.

In einer weiteren Alternative sind die Verstelleinrichtungen 30 und 31 zur Verstellung des Ventilhubes von Einlaßventilen und/oder Auslaßventilen der Brennkraftmaschine vorgesehen. Auch hier führt ein einseitiger Ausfall einer der Verstelleinrichtungen 30 oder 31 durch den einseitig veränderten Ventilhub zu unterschiedlichen Füllungsgraden der den Abgassträngen 21 und 22 zugeordneten Zylinder und damit zu unterschiedlichen Abgas-Zusammensetzungen.

## Patentansprüche

1. Fehlererkennungseinrichtung (23) für eine Brennkraftmaschine (1) mit:
- einer Abgasanlage (10), die zwei getrennte Abgasstränge (21,22) aufweist, wobei in jedem Abgasstrang (21, 22) jeweils eine Lambda-Sonde (27,28) angeordnet ist, die getrennt für jeden Abgasstrang (21, 22) den Wert des Sauerstoffanteils, den Lambda-Wert (L1, L2) kontinuierlich ermittelt,
- einer gemeinsamen Meßvorrichtung (3) zur Erfassung der zugeführten Luft (ml) und
- einer gemeinsamen Steuereinrichtung (29) zur Zumessung von Kraftstoff,
- **dadurch gekennzeichnet, daß**
- die Fehlererkennungseinrichtung (23) eine Differenz der Lambda-Werte (L1 und L2) bildet und diese Differenz mit einem vorgebbaren Grenzwert vergleicht und einen Fehler in einem Abgasstrang (21, 22) oder an einem diesem Abgasstrang zugeordnetem Bauteil erkennt, wenn die von den Lambda-Sonden gelieferten Signale um einen einstellbaren Grenzwert voneinander abweichen.

2. Fehlererkennungseinrichtung nach Anspruch 1, **dadurch gekennzeichnet, daß**
- in den Abgassträngen (21,22) jeweils ein Abgasturbolader (4,5) angeordnet ist,
- eine gemeinsamen Vorrichtung (3) zur Erfassung der zugeführten Luft (ml) als Regelgröße,
- ein auf alle Abgasturbolader (4,5) wirkender Steller (15) für die zugeführte Luft,
- ein Regler (16) für die zugeführte Luft, der durch Ansteuerung des Stellers (15) den Wert der zugeführten Luft (ml) einem Sollwert nachführt und
- eine Steuerung (24) für die zugeführte Luft, die abhängig von Betriebsgrößen der Brennkraftmaschine (1) den Steller (15) ansteuert, vorgesehen sind, wobei die Fehlererkennungseinrichtung (23) von einer Ansteuerung des Stellers (15) durch den Regler (16) auf eine Ansteuerung durch die Steuerung (24) umstellt, wenn sie einen Fehler erkennt.

3. Fehlererkennungseinrichtung nach Anspruch 1 oder 2, **dadurch gekennzeichnet, daß** die Brennkraftmaschine eine Verstelleinrichtung (30) zur gemeinsamen Verstellung der Winkellage von Nockenwellen der Brennkraftmaschine aufweist und die Fehlererkennungseinrichtung (23) einen Fehler in der Verstelleinrichtung erkennt, wenn die von den Lambda-Sonden (27, 28) gelieferten Signale auf eine Betätigung der Verstelleinrichtung hin voneinander abweichen.

4. Fehlererkennungseinrichtung nach Anspruch 1 oder 2, **dadurch gekennzeichnet, daß** die Brennkraftmaschine eine Verstelleinrichtung (30) zur gemeinsamen Verstellung des Ventilhubes von Einlaßventilen und/oder Auslaßventilen der Brennkraftmaschine aufweist und die Fehlererkennungseinrichtung (23) einen Fehler in der Verstelleinrichtung erkennt, wenn die von den Lambda-Sonden (27, 28) gelieferten Signale auf eine Betätigung der Verstelleinrichtung hin voneinander abweichen.

5. Verfahren zum Betreiben einer Brennkraftmaschine (1), die zwei getrennte Abgasstränge (21, 22), wobei jeder Abgasstrang einen Lambda-Regelkreis mit jeweils einer Lambda-Sonde (27, 28) in einem Abgasstrom enthält, wobei die Lambda-Sonden (27, 28) ein stetiges Signal für den Lambda-Wert des Abgases erzeugen, wobei ferner eine gemeinsame Meßeinrichtung (3) zur Erfassung der zugeführten Luft (ml) und eine gemeinsame Steuereinrichtung (29) zu Zumessen von Kraftstoff vorgesehen ist und folgende Schritte durchgeführt werden:
- Bestimmen des Lambda-Wertes (L1,L2) des Abgases für jeden Abgasstrang (21,22),
- Berechnen der Differenz der Lambda-Werte,
- Vergleichen der Differenz mit einem Grenzwert und
- Ausgeben eines Fehlersignales für einen Fehler in einem Abgasstrang (21, 22) oder an einem diesem Abgasstrang zugeordneten Bauteil, wenn die Differenz größer als ein Grenzwert ist.

6. Verfahren nach Anspruch 5, **gekennzeichnet durch** folgende Schritte:
- Ermitteln eines Stellwertes (tv) für die Ansteuerung eines auf alle Abgasturbolader (4,5) der Brennkraftmaschine (1) wirkenden Stellers (15) für die zugeführte Luft **durch** ein Verfahren zur Regelung der zugeführten Luft, wenn kein Fehlersignal vorliegt oder
- Ermitteln des Stellwertes (tv) für die Ansteuerung des Stellers (15) **durch** ein Verfahren zur Steuerung der zugeführten Luft, wenn ein Fehlersignal vorliegt.

7. Verfahren nach Anspruch 5 oder 6, **gekennzeichnet durch** die Schritte zum Ausgeben eines Fehlersignales:
- Durchführen des Verfahrens, wenn eine Verstelleinrichtung (30) zur gemeinsamen Verstellung der Winkellage von Nockenwellen der Brennkraftmaschine betätigt wird und
- Zuordnen des Fehlersignales zu der Verstelleinrichtung, wenn das Fehlersignal innerhalb eines Zeitfensters nach Betätigen der Verstelleinrichtung erstmals auftritt.

8. Verfahren nach Anspruch 5 oder 6, **gekennzeichnet durch** die Schritte zum Ausgeben eines Fehlersignales:
- Durchführen des Verfahrens, wenn eine Verstelleinrichtung (30) zur gemeinsamen Verstellung des Ventilhubes von Einlaßventilen und/oder Auslaßventilen der Brennkraftmaschine betätigt wird und
- Zuordnen des Fehlersignales zu der Verstelleinrichtung(30), wenn das Fehlersignal innerhalb eines Zeitfensters nach Betätigen der Verstelleinrichtung erstmals auftritt.

## Claims

1. An error-detection device (23) for an internal-combustion engine (1) having:
- an exhaust-gas system (10) which comprises two separate exhaust-gas lines (21, 22), wherein one respective lambda probe (27, 28), which continuously determines the value of the oxygen portion, the lambda value (**L1**, **L2**), separately for each exhaust-gas line (21, 22), is arranged in each exhaust-gas line (21, 22) in each case,
- a common measuring device (3) for detecting the air supplied (**ml**), and
- a common control device (29) for the admixture of fuel,
- **characterized in that**
- the error-detection device (23) forms a difference of the lambda values (**L1** and **L2**) and compares this difference with a pre-settable threshold value and detects an error in an exhaust-gas line (21, 22) or on a component associated with the said exhaust-gas line if the signals delivered by the lambda probes deviate from one another by an adjustable threshold value.

2. An error-detection device according to Claim 1, **characterized in that**
- one respective exhaust-gas turbocharger (4, 5) is arranged in each case in the exhaust-gas lines (21, 22),
- a common device (3) for detecting the air supplied (**ml**) as a regulating variable;
- a regulating unit (15), acting upon all the exhaust-gas turbochargers (4, 5), for the air supplied,
- a regulator (16) for the air supplied, which makes the value of the air supplied (**ml**) follow a nominal value by actuation of the regulating unit (15), and
- a control device (24) for the air supplied is provided, which actuates the regulating unit (15) in a manner dependent upon operating variables of the internal-combustion engine (1), wherein the error-detection device (23) switches over from actuation of the regulating unit (15) by the regulator (16) to actuation by the control device (24) if it detects an error.

3. An error-detection device according to Claim 1 or 2, **characterized in that** the internal-combustion engine comprises an adjustment device (30) for the common adjustment of the angular position of camshafts of the internal-combustion engine, and the error-detection device (23) detects an error in the adjustment device if the signals, delivered by the lambda probes (27, 28), for actuation of the adjustment device deviate from one another.

4. An error-detection device according to Claim 1 or 2, **characterized in that** the internal-combustion engine comprises an adjustment device (30) for the common adjustment of the valve stroke of intake valves and/or exhaust valves of the internal-combustion engine, and the error-detection device (23) detects an error in the adjustment device if the signals, delivered by the lambda probes (27, 28), for actuation of the adjustment device deviate from one another.

5. A method of operating an internal-combustion engine (1), which [has] two separate exhaust-gas lines (21, 22), wherein each exhaust-gas line contains a lambda regulating circuit with one respective lambda probe (27, 28) in an exhaust-gas flow in each case, wherein the lambda probes (27, 28) generate a steady signal for the lambda value of the exhaust gas, wherein a common measuring device (3) is further provided for detecting the air supplied (ml) and a common control device (29) for the admixture of fuel is provided, and the following steps are carried out:
- determining the lambda value (**L1**, **L2**) of the exhaust gas for each exhaust-gas line (21,22),
- calculating the difference of the lambda values,
- comparing the difference with a threshold value, and
- emitting an error signal for an error in an exhaust-gas line (21, 22) or on a component associated with the said exhaust-gas line if the difference is greater than a threshold value.

6. A method according to Claim 5, **characterized by** the following steps:
- determining a setting value (**tv**) for actuating a regulating unit (15), acting upon all the exhaust-gas turbochargers (4, 5) of the internal-combustion engine (1), for the air supplied, by a method of regulating the air supplied, if an error signal is not present or
- determining the setting value (**tv**) for actuating the regulating unit (15) by a method of controlling the air supplied, if an error signal is present.

7. A method according to Claim 5 or 6, **characterized by** the steps for emitting an error signal:
- performing the method if an adjustment device (30) for the common adjustment of the angular position of camshafts of the internal-combustion engine is actuated, and
- correlating the error signal with the adjustment device if the error signal occurs for the first time inside a time window after actuation of the adjustment device.

8. A method according to Claim 5 or 6, **characterized by** the steps for emitting an error signal:
- performing the method if an adjustment device (30) for the common adjustment of the valve stroke of intake valves and/or exhaust valves of the internal-combustion engine is actuated, and
- correlating the error signal with the adjustment device (30) if the error signal occurs for the first time inside a time window after actuation of the adjustment device.

## Revendications

1. Dispositif de détection de défauts (23) pour un moteur à combustion interne (1) comportant :
un système d'échappement des gaz (10) qui comporte deux lignes d'échappement des gaz (21, 22), une sonde lambda (27, 28) étant disposée dans chaque ligne d'échappement des gaz (21, 22), qui détermine en continu, séparément pour chaque ligne d'échappement des gaz (21, 22), la valeur de la teneur en oxygène, la valeur lambda (L1, L2),
un dispositif de mesure (3) commun pour détecter l'air (ml) amené et un dispositif de commande (29) commun pour le dosage du carburant,
**caractérisé en ce que**
le dispositif de détection de défauts (23) forme une différence entre les valeurs lambda (L1) et (L2) et compare cette différence à une valeur limite qui peut être prédéfinie, et reconnaît un défaut dans une ligne d'échappement des gaz (21, 22) ou dans un composant associé à cette ligne d'échappement des gaz, lorsque les signaux fournis par les sondes lambda diffèrent l'un de l'autre d'une valeur limite réglable.

2. Dispositif de détection de défauts selon la revendication 1, **caractérisé en ce que**
dans chacune des lignes d'échappement des gaz (21, 22) est disposé un turbocompresseur des gaz d'échappement (4, 5),
un dispositif (3) commun de détection de l'air (ml) amené en tant que grandeur de régulation,
un organe de réglage (15) agissant sur tous les turbocompresseurs (4, 5) pour l'air amené,
un régulateur (16) pour l'air amené qui, par commande de l'organe de réglage (15), fait que la valeur de l'air amené (ml) suit une valeur de consigne, et
une commande (24) pour l'air amené, qui commande l'organe de réglage (15) en fonction des grandeurs de fonctionnement du moteur à combustion interne (1), sont prévus, le dispositif de détection de défauts (23) commutant d'un ordre de l'organe de réglage (15) par le régulateur (16) à un ordre par la commande (24), lorsqu'il reconnaît un défaut.

3. Dispositif de détection de défauts selon la revendication 1 ou 2, **caractérisé en ce que** le moteur à combustion interne comporte un dispositif de réglage (30) pour le réglage commun de la position angulaire des arbres à cames du moteur à combustion interne, et le dispositif de détection de défauts (23) reconnaît un défaut dans le dispositif de réglage lorsque les signaux fournis par les sondes lambda (27, 28) à la suite d'un actionnement du dispositif de réglage, diffèrent les uns des autres.

4. Dispositif de détection de défauts selon la revendication 1 ou 2, **caractérisé en ce que** le moteur à combustion interne comporte un dispositif de réglage (30) pour le réglage commun de la course des soupapes d'admission et/ou soupapes d'échappement du moteur à combustion interne, et le dispositif de détection de défauts (23) reconnaît un défaut dans le dispositif de réglage lorsque les signaux fournis par les sondes lambda (27, 28) à la suite d'un actionnement du dispositif de réglage, diffèrent les uns des autres.

5. Procédé d'exploitation d'un moteur à combustion interne (1) qui comporte deux lignes d'échappement des gaz (21, 22) séparées, chaque ligne d'échappement des gaz contenant un circuit de régulation lambda avec chacun une sonde lambda (27, 28) dans un courant des gaz d'échappement, les sondes lambda (27, 28) produisant un signal continu pour la valeur lambda des gaz d'échappement, un dispositif de mesure (3) commun étant en outre prévu pour détecter l'air (ml) amené et un dispositif de commande (29) commun pour l'ajout mesuré de carburant, et les étapes suivantes étant exécutées :
détermination de la valeur lambda (L1, L2) des gaz d'échappement pour chaque ligne d'échappement des gaz (21, 22),
calcul de la différence entre les valeurs lambda,
comparaison de la différence avec une valeur limite et
sortie d'un signal de défaut pour un défaut dans une ligne d'échappement des gaz (21, 22) ou dans un composant associé à cette ligne d'échappement des gaz, lorsque la différence est supérieure à une valeur limite.

6. Procédé selon la revendication 5, **caractérisé par** les étapes suivantes :
détermination d'une valeur de réglage (tv) pour la commande d'un organe de réglage (15) agissant sur tous les turbocompresseurs des gaz d'échappement (4, 5) du moteur à combustion interne (1) pour l'air amené, par un procédé de régulation de l'air amené, lorsqu'aucun signal de défaut n'est présent ou
détermination de la valeur de réglage (tv) pour la commande de l'organe de réglage (15) par un procédé de commande de l'air amené, en présence d'un signal de défaut.

7. Procédé selon la revendication 5 ou 6, **caractérisé par** les étapes de sortie d'un signal de défaut :
mise en oeuvre du procédé lorsqu'un dispositif de réglage (30) pour le réglage commun de la position angulaire des arbres à cames du moteur à combustion interne est actionné, et
affectation du signal de défaut au dispositif de réglage lorsque le signal de défaut apparaît pour la première fois à l'intérieur d'une fenêtre de temps après actionnement du dispositif de réglage.

8. Procédé selon la revendication 5 ou 6, **caractérisé par** les étapes de sortie d'un signal de défaut :
mise en oeuvre du procédé lorsqu'un dispositif de réglage (30) pour le réglage commun de la course des soupapes d'admission et/ou soupapes d'échappement du moteur à combustion interne est actionné, et
affectation du signal de défaut au dispositif de réglage (30) lorsque le signal de défaut apparaît pour la première fois à l'intérieur d'une fenêtre de temps après actionnement du dispositif de réglage.
